# EUROPEAN PATENT APPLICATION

(11) **EP 2 075 740 A1**
(43) Date of publication of application: **01.07.2009**
(21) Application number: 07124064.2
(22) Date of filing: 24.12.2007
(51) Int. Cl.: G06K 9/00, G08B 13/194

(54) **Method for making a decision.**

(71) Applicant: Katholieke Hogeschool limburg industriele Wetenschappen en technologie, 3590 Diepenbeek (BE)
(72) Inventor: Beckers, Wim, 3590 Diepenbeek (BE); Claesen, Eric, 3590 Diepenbeek (BE); Philippaerts, Yannick, 3530 Houthalen (BE); Loots, Raf, 3530 Houthalen (BE)
(74) Representative: Quintelier, Claude

(57) **Abstract**

A method for making a decision based on a movement of at least one object, which movement takes place through at least a part of a region having a plurality of zones. The at least one object is detected within an image showing the region. The at least one object is then further detected in successive images showing the region. Based on the combination of the zone in which an object is initially detected, and the zone in which an object is last detected, a decision is made.

## Description

The present invention relates to a method for making a decision based on a movement of at least one object, which movement being through at least a part of a region having a plurality of zones, which method comprises the steps of:
- forming a set of combinations by each time combining two of said plurality of zones;
- assigning an action to each combination of said set;
- detecting said at least one object in an initial zone and in a subsequent zone;
- after detection of said at least one object in said initial zone and said subsequent zone, forming a further combination of zones;
- performing a matching operation between said further combination and said set of combinations;
- deciding to perform said action assigned to the combination matching with said further combination.

Methods for making a decision based on a movement of at least one object can be applied in very different type of applications. One type of application is a safety-system in which the action decided to perform, is a count of the objects moving through the region. In such a safety-system, an object gets counted when first detected in a first zone and then in a second zone. It is required in safety-systems that the counting system works accurate and correct. An existing example of a method, which is suitable for being applied in such a safety-system, works with radio frequency identification (RFID). The system comprises at least two zones each having a RFID-receiver, which zones are to be passed by an object having a RFID-transmitter. If the system first detects the object in one zone and then the same object in another zone, the action, which is a count in this example, gets performed.

This way of working however has several disadvantages. A first disadvantage is that the object, which can be for example a person or a car, must carry a RFID-transmitter in order to be detected and counted. When the transmitter is broken, or the object doesn't carry the transmitter, the counting system can not perform the count. This has to be avoided in safety-systems. Another disadvantage is that in some locations, for example when counting people in a manhole of a chemical plant, it is hard to mount the RFID-receivers. The reason for this is that the zones are formed by the range in which the receivers are able to receive a signal. An object only gets detected when it comes close to a receiver. Therefore the receivers have to be mounted inside the zones, which zones are small in some cases, like for example a manhole. It therefore requires a lot of work to install the hardware needed to perform the count.

It is an object of the present invention to realise a method for making a decision based on a movement of at least one object, which method does not necessarily require an object to carry anything which takes part in the method, which method can be performed using easy installable hardware, which method is provided for detecting multiple objects at a time, and which method allows making decisions in complex situations.

Therefore the method according to the invention comprises the following steps:
- grabbing successive images from said region;
- monitoring said successive images in order to detect an initial presence of said at least one object in the region;
- upon detection of said initial presence, determining in which of said plurality of zones said initial presence is detected and designating the latter zone as an initial zone;
- assigning said initial zone to said at least one object;
- tracking a path followed by said at least one object during said movement by retrieving from successive one of said images object data relating to said at least one object;
- detecting by monitoring said path an absence of said at least one object in the region;
- after said detection of said absence, retrieving from said object data in which of said plurality of zones said absence was detected, and designating the latter zone as a subsequent zone;
- assigning said subsequent zone to said at least one object;

The decision gets made on the basis of visual information, namely images, in which the object gets detected. This therefore does not necessarily require the object to carry anything which takes part in the method. For detection purpose, the method only uses images as input data and the zones are defined by areas within these images. There is therefore no need for installing other hardware then cameras. Positioning the camera so as to monitor the required zones in the images is enough for enabling a reliable data acquisition. To this purpose the camera has to be mounted in a substantially open space, which simplifies the installation. An object which takes part in the execution of the method only covers a part of the image. It does not obscure the complete image for on one image, multiple objects can be detected at a time. The gist of the method according to the invention is that the actual decision gets performed on the basis of the initial and the subsequent zone. This allows to easily decide in complex situations, for example a crossroad having four arms where only the cars coming from the first and going into the second arm are to get counted. In this example the decision to count only gets performed if the initial zone corresponds with the first arm, and the subsequent zone corresponds with the second arm.

In a preferred embodiment, at least one of said at least one object carries visual identification means and the method comprises the steps of:
- identifying said visual identification means on the basis of at least one of said successive images;
- determining on which of said at least one object said identification means is identified, and assigning an identity, based on latter identification means, to the determined object.

In this embodiment, the objects can be identified, and the action can be made dependent to the identity. An example is a situation where not only counting, but also recognising objects is wanted. This is often wanted in safety-systems where it is important to know which object is in which place. There are various types of visual identification means for objects. One example of such means is a 2D-barcode. This barcode can be applied to the objects, and be read out from an image. Another type of visual identification means, when the object is a car, is the licence plate of the car. This licence plate can get extracted from an image and assigned to the object. A more advanced type of identification, when the object is a person, is face-recognition. This also can be built into the method to identify the object and assign an identity to the object.

The combination of the steps of tracking a path followed by said object, and identifying said object, has a remarkable consequence. The visual identification means are not continuously perceivable in the successive images. An object can for example turn, thereby hiding the identification means from the camera. The path, followed by an object, gets determined without the object being identified in first instance. Some data, like the initial zone, can be assigned to this object and can be "remembered" in this way as data corresponding to this object. When anywhere on the path the object gets identified, this identity can get assigned to this object too. This results in that even when the identification means are only on one image sufficiently visible, the object gets identified and this identity can be "remembered" as corresponding to this object in the same way as the initial zone can. This is a desired advantage, enabling for example to count and identify objects, even if the identification means are not constantly perceivable. It also still allows an object to get detected, even if no identification took place, which is an advantage in view of safety.

The invention will now be described in more details with respect to the drawings illustrating some preferred embodiments of a method for making a decision according to the present invention. In the drawings:
figure 1 illustrates an image used in the method according to the invention showing a first possible situation;
figure 2 illustrates an image used in the method according to the invention showing a second possible situation;
figure 3 illustrates an image used in the method according to the invention showing a third possible situation;
figure 4 illustrates an example of a Data Matrix ECC 200;
figure 5 illustrates schematically a method according to the invention; and
figure 6 illustrates an object and a corresponding output from the image processing module.

In the drawings a same reference number has been allocated to a same or analogous element.

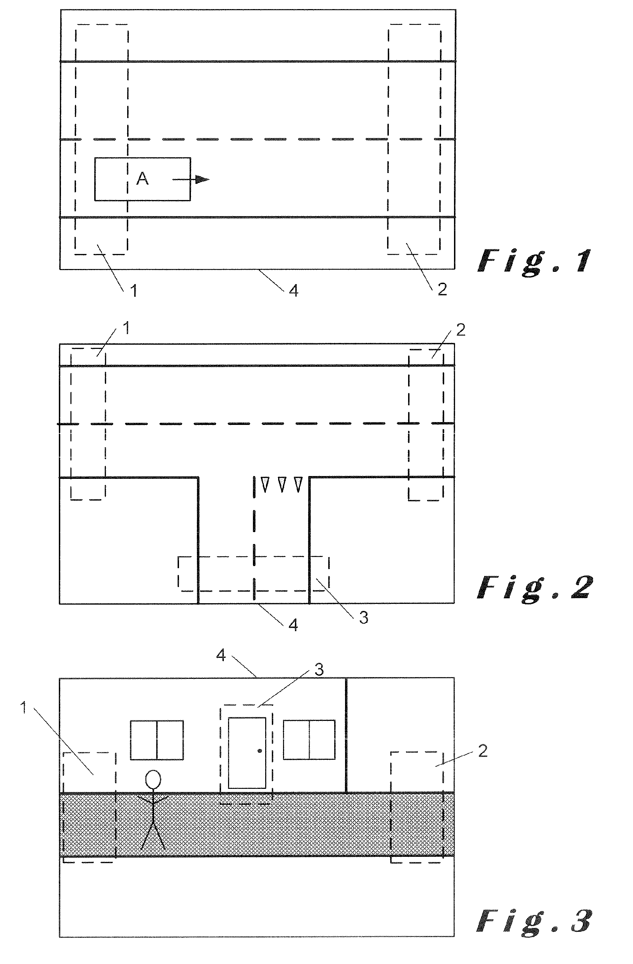

Figure 1 shows the situation in which it is the most simple to make a decision based on a movement of at least one object. The figure shows a region 4 in which an object can enter and exit on the left hand side, and can enter and exit on the right hand side. To distinguish the possible entry and exit areas from each other, the region 4 comprises zones. A first zone 1 is defined by an area in the region 4 where an object can enter and exit on the left side. A second zone 2 is defined by an area in the region 4 where an object can enter and exit on the right hand side. The first zone 1 and second zone 2 are defined in such a manner as to coincide with the areas where an object can enter the region 4, and to coincide with the areas where an object can exit the region 4.

In this situation, it is for example wanted to count only those objects which move from the left side to the right side. To this purpose, a set of combinations is to be created which set comprises all possible combinations of two zones. To each combination of the set, an action is assigned as follows (zone i; zone j) -> action k. In this example the combination of zones left-right is assigned to an action to count: (zone 1; zone 2) -> count. The combination of zones right-left is assigned to an action to do nothing (zone 2; zone 1) -> do nothing. These two combinations form the set of combination in this situation.

The method according to the invention uses successive images which preferably come from a camera. The region 4 is determined by the images and therefore the camera has to be positioned so as to determine the region 4 in an optimal way. Also the presence of light flashes on the images can be influenced by positioning the camera so as to take an image either towards or away from a light source.

The movement of at least one object through at least a part of the region 4 has to be detected. Therefore successive images from said region 4 are grabbed. These images are being monitored in order to detect an initial presence of an object into the region 4. After the initial presence has been detected, the path which is followed by the object has to be tracked. By monitoring the path, the absence of the object can be detected.

To count only those objects which move from the left to the right in this situation, it is not enough to only detect the left zone 1 as the initial zone, for it is possible that an object turns and also exits the region 4 in this left zone. It is also not enough to only detect the right zone 2 as the subsequent zone, which is the zone in which the absence is detected, for it is possible that that object also arrived in the region 4 in this right zone 2. To perform a reliable count, one has to know both the initial and subsequent zone on the path travelled by the object. To obtain this, the path followed by the object has to be tracked. Both the initial zone and subsequent zone of the object have to be assigned to that object. Then the decision can be made on the basis of the combination of this initial zone and subsequent zone. This combination is matched with the set of combinations, and the action assigned to the matching combination gets performed.

Figure 2 shows a more complex situation to perform a count. In this situation, objects can enter and exit the region 4 in three different places. There are therefore three zones. It is for example wanted to count the objects which move from the bottom side to the right hand side. The combination to which the action to count is assigned is bottom-right (zone 3; zone 2) -> count. In this situation, it is even more clear that the path followed by the object is to be tracked to obtain a reliable decision, for an object exiting the region 4 in the right hand zone could have entered the region 4 in the bottom zone, the left hand zone or even in the right hand zone. If only objects coming from the bottom zone are to get counted, the path has to be tracked so as to know the zone in which the object entered the region 4.

Figure 3 shows a situation where the objects to get counted are persons. In this situation, one of the zones, namely the third zone 3, is situated in the middle of the region 4. It is for example wanted to count all the objects which move through the door. To this purpose, both the combinations right-door and left-door are assigned to the action to count (zone 1; zone 3) -> count and (zone 2; zone 3) -> count. The other combinations are assigned to the action to do nothing (zone 1; zone 2) - > do nothing and (zone 2; zone 1) -> do nothing and (zone 3; zone 2) -> do nothing and (zone 3; zone 1) -> do nothing. The object only moves through a part of the region 4 to get counted in this situation. It is possible for the object to move through the third zone 3 without exiting the region 4 in this zone. A person can for example walk from the left hand side to the right hand side thereby walking by in front of the door, which is the third zone 3. Although the person then walks through the third zone 3, he or she does not moves though the door and therefore is not to be counted. An object therefore is only to be considered as exited the region 4 from the moment he is not visible any more in the region 4. The zone in which the absence of that object is detected, is then the subsequent zone.

To track the path followed by an object, there are various possible methods. However each method is preferably provided for linking objects on a present image to corresponding objects on a previous image. This can be done based on different principles. It is for example possible to make a colour-profile of an object. An object on a present image having a similar colour-profile as an object on a previous image corresponds with this object. Another possibility is to decide object correspondence based on overlap-area. An object on a present image having a sufficiently big overlap-area with an object on a previous image corresponds with this object. The following paragraphs will make this more clear.

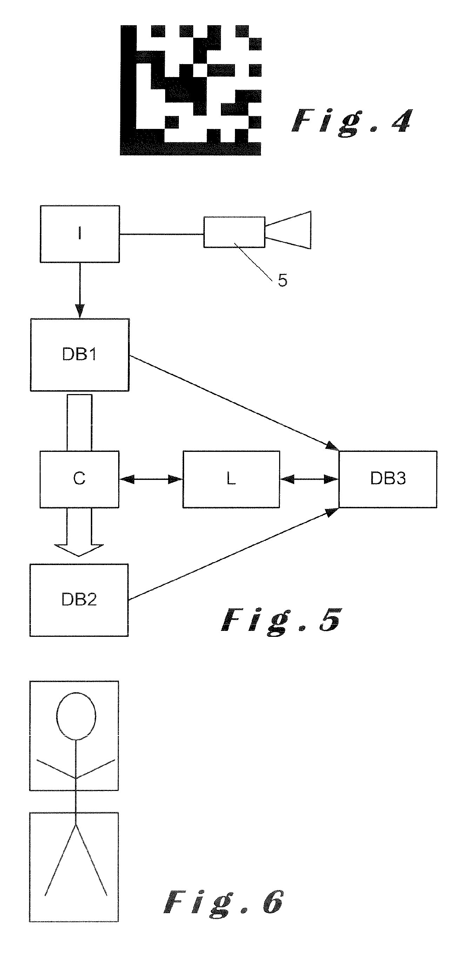

Figure 5 shows a preferred setup for tracking the path followed by an object. The setup comprises a camera 5 which is connected to an image processing module I. This module I is provided for grabbing images from the camera 5, processing the images, and writing processed data into a database DB1. There are three databases forming a database configuration, namely DB1, DB2 and DB3. The database DB1 and DB2 are connected by a calculation module C, which is provided for receiving data from DB1 and writing data into DB2. The calculation module C is also provided for getting triggered by a logic module L, which logic module L is provided for scanning DB3. It is to be noted that this setup can be integrated into a computer program.

When decision about object correspondence is based on overlap-area, this overlap-area has to be calculated first. A preferred way to obtain this uses the database configuration as shown in figure 5. DB1 gets emptied on every incoming image, and filled up again by an image processing module I, with the data extracted from the images. The image processing module grabs an image from a camera and processes the image so as to extract all the movements which are visible in that image. Those movements are mostly caused by objects. From the movements, data gets extracted, which data comprises the surface-area, the position coordinates, the height and the width of each movement. It should be clear that the movements which are visible are not always caused by objects, for a light flash or a shadow can be detected as a movement too. Therefore the data in this DB1 should be interpreted well, as explained further, to obtain a reliable decision.

DB2 comprises the object data assigned to the objects which are inside the region 4. This data comprises mainly the surface-area, the position coordinates, the height and the width of each object which has been visible on one of the previous images. The data is valued with respect to the closest previous image on which the object is detected, for this object data gets updated on every new image. Although DB1 could contain spurious data, the data in DB2 is generally reliable.

DB1 and DB2 contain data, from which DB3 can be generated. DB3 gets emptied on every incoming image, and filled up again with a calculation of the overlap-areas between all object data contained by DB2, and all movement data contained by DB1. Having this information, which indicates the resemblance between DB1 and DB2, stored in a separate database, makes it easier to work with.

To make a decision about object correspondence, DB3 is to be interpreted by a logic-module L. This logic-module L scans the DB3 and, based on the resemblance between DB1 and DB2, decides which movement or movements contained by DB1 correspond to which object or objects data contained by DB2. The logic-module L triggers a calculation-module C which updates DB2 using data from DB1. This logic-module L comprises several analysis tools to make a more reliable decision, which will be explained further on the basis of some examples.

The calculation-module C, upon triggering by the logic-module, calculates the update data and then writes this data into DB2, thereby updating this database. This update data comprises a new surface-area, new coordinates, a new width and height, which are all valued with respect to the data from DB1. Additionally, this update data comprises a speed at with which the object is moving. After the database DB2 being completely updated, DB1 and DB3 can be emptied and refilled with new data originating from a subsequent image, after which the mentioned steps can be repeated.

An object arriving into the region 4 gets detected as follows. DB1 gets filled up by the image processing module I and then contains the movement corresponding to this object. DB2 contains no object data which corresponds to this object, as it just entered the region 4. When no correspondence is found, the logic-module L checks if the movement is located in one of the zones in which an object can enter the region 4. If this is the case, the calculation-module C is triggered to create a new record in DB2 having the data of the movement corresponding to the new object. The latter zone then gets assigned as the initial zone to that new object.

An absence of an object following a path gets detected as follows. The object leaves the region and therefore causes no movement in the region which movement would get stored into DB1. DB2 therefore contains object data which has no correspondence any more with any movement contained by DB1. The logic-module L then checks if the position of the object contained by DB2 corresponds with the position of one of the zones in which an object can exit the region 4. If this is the case, the calculation-module C is triggered to assign the latter zone as the subsequent zone to the object, and to delete that object from DB2.

Another possibility of a resemblance between DB1 and DB2 occurs when two objects move so close to each other as to only form one visible movement any more. In this situation, the logic-module detects a movement contained by DB1 which has a relatively big overlap-area with two objects contained by DB2. The logic-module recognises this situation as two objects moving close to each other and triggers the calculation-module C to update both the objects contained by DB2 with the same data, which corresponds to the one movement. Despite only one movement is visible, the database DB2 still contains two objects corresponding to this one movement. This results in no information getting lost about these objects.

The advantage of working with this database system is that it is possible to make a correct decision despite shortcomings of the image processing module I. This module I extracts from the images the movements, which are not always caused by objects in for example places where the intensity of lighting is not constant. An example of a shortcoming of the image processing module I is illustrated in figure 6. The figure shows one object which is not recognised in one movement, but due to a shortcoming is divided into two movements. The database system makes it possible for the logic-module L to recognise this. In scanning the DB3, the logic-module detects two movements having a relatively big overlap-area with only one object. This indicates that the two movements actually relate to only one object. The logic-module then can trigger the calculation-module C to merge the two movements before updating DB2.

Another shortcoming is a situation in which a movement gets detected which is not caused by an object. The same steps occur as when an object arrives into the region 4, but in this case, the movement is not located in one of the zones in which an object can enter the region 4. Therefore, the logic-module L does not trigger the calculation-module C. In this way the shortcoming is eliminated.

Another possible shortcoming is an opposite situation in which an object gets not detected by the image processing module I. The same steps occur as when an object leaves the region 4, but in this case, the movement is not located in one of the zones in which an object can exit the region 4. Therefore, the logic-module L does not trigger the calculation-module C. In this way the shortcoming is eliminated.

To obtain a sufficiently big overlap-area so as to make a reliable decision, the frequency of the incoming images should be high in first instance. Because the object moves inside the region 4, the surfaces from which the overlap-area is calculated, corresponding to these objects, move also according to each other, and this reduces the overlap-area. To make a more reliable decision, a speed is calculated and assigned to the objects in DB2. Instead of calculating the overlap-area with respect to the position stored in DB2, first an estimation is made, using the information from DB2, to estimate the current position of the object. The overlap-area is then calculated between the movements in DB1, and the estimated current positions from the objects corresponding to the data from DB2. The overlap-areas will be much bigger, which makes the decision more reliable.

In some situations, it is not only wanted to detect, but also to identify the objects. There are different ways to identify an object. Because the method uses images as input data, and installing additional hardware is not wanted, the objects should be provided with visual identification means. Such visual identification means exist in very different types. A preferred type to use in this method is a 2D barcode system. Various 2D barcode systems are known, for example the Data Matrix ECC 200, as illustrated in figure 4, which is standardized by the ANSI/AIM BC11 and the ISO/IEC 16022 specification. The code represented by this Data Matrix ECC 200 can easily be read out from an image, and assigned to an object. The identity of the object is then defined by the code of the Data Matrix ECC 200.

It is to be noted that also other types of visual identification means can be used in this method. It is for example possible to implement face recognition to identify persons. Also a licence plate of a car can be read out and assigned to an object.

In the method, the identification takes place by the following steps. First, the image processing module detects identification means on one image using the standardized methods. Then the image processing module determines on which object this identification means is identified, and passes this information to DB1. The calculation module C transfers the information from DB1 to DB2 thereby assigning it to an object. Once the identity is assigned to an object, the object is identified even if the identification means are not perceivable any more on the next images.

There are various possible actions to perform in this method. A previously mentioned action is to count, but another possible action is to log identities. It is for example wanted to log the identities of the objects which are in a specific place, or the objects which follow a specific path. Other actions can be performed too, for example opening a door or displaying a message.

## Claims

1. A method for making a decision based on a movement of at least one object, which movement takes place through at least a part of a region having a plurality of zones, which method comprises the steps of:
• forming a set of combinations by each time combining two of said plurality of zones;
• assigning an action to each combination of said set;
• grabbing successive images from said region;
• monitoring said successive images in order to detect an initial presence of said at least one object in the region;
• upon detection of said initial presence, determining in which of said plurality of zones said initial presence is detected and designating the latter zone as an initial zone;
• assigning said initial zone to said at least one object;
• tracking a path followed by said at least one object during said movement by retrieving from successive one of said images object data relating to said at least one object;
• detecting by monitoring said path an absence of said at least one object in the region;
• after said detection of said absence, retrieving from said object data in which of said plurality of zones said absence was detected, and designating the latter zone as a subsequent zone;
• assigning said subsequent zone to said at least one object;
• after determination of said initial zone and said subsequent zone forming a further combination of zones;
• performing a matching operation between said further combination and said set of combinations;
• deciding to perform said action assigned to the combination matching with said further combination.

2. The method for making a decision according to claim 1, **characterised in that** at least one of said at least one object carries visual identification means and the method comprises the steps of:
• identifying said visual identification means on the basis of at least one of said successive images;
• determining on which of said at least one object said identification means is identified, and assigning an identity, based on latter identification means, to the determined object.

3. The method for making a decision according to claim 2, **characterised in that** said identification means being a 2D barcode, and the step identifying said visual identification means being reading out said 2D barcode.

4. The method for making a decision according to one of the claims 1 to 3, **characterised in that** the step of tracking said path followed by said at least one object is performed by the steps of:
• generating said object data on detection of said initial presence on one of said successive images, which object data comprises said initial zone, a position and a surface-area of said at least one object, which position and surface-area are valued with respect to the latter image;
• calculating at a next of said successive images an overlap-area between said at least one object on the latter image, and said object data having said position and surface-area which are valued with respect to a previous image;
• deciding on the basis of said overlap-area that said at least one object on said next of said successive images corresponds to said object data;
• updating said object data with a new position and a new surface-area, which are valued with respect to said next of said successive images.

5. A device for making a decision based on a movement of at least one object, which movement takes place through at least a part of a region having a plurality of zones, which device comprises:
• a combination module provided for forming a set of combinations by each time combining two of said plurality of zones and assigning an action to each combination of said set;
• a combination memory provided for storing each combination of said set assigned to said action;
• grabbing means provided for grabbing successive images taken from said region;
• monitoring means provided for monitoring said successive images and detecting an initial presence of said at least one object in the region;
• first determination means provided for, upon detection of said initial presence, determining in which of said plurality of zones said initial presence is detected and designating the latter zone as an initial zone, and assigning said initial zone to said at least one object;
• an initial zone memory provided for storing said initial zone assigned to said at least one object;
• tracking means provided for tracking a path followed by said at least one object during said movement by retrieving from successive one of said images object data relating to said at least one object;
• detection means provided for monitoring said path and detecting an absence of said at least one object in the region;
• retrieving means provided for, after said detection of said absence, retrieving from said object data in which of said plurality of zones said absence was detected, and designating the latter zone as a subsequent zone, and assigning said subsequent zone to said at least one object;
• a subsequent zone memory provided for storing said subsequent zone assigned to said at least one object;
• forming means provided for, after determination of said initial zone and said subsequent zone, forming a further combination of zones;
• matching means provided for performing a matching operation between said further combination and said set of combinations; and
• first deciding means provided for deciding to perform said action assigned to the combination matching with said further combination.

6. The device for making a decision according to claim 5, **characterised in that** the tracking means comprises:
• generating means provided for generating said object data on detection of said initial presence on one of said successive images, which object data comprises said initial zone, a position and a surface-area of said at least one object;
• calculation means provided for calculating at a next of said successive images an overlap-area between said at least one object on the latter image, and said object data having said position and surface-area which are valued with respect to a previous image;
• second deciding means provided for deciding on the basis of said overlap-area that said at least one object on said next of said successive images corresponds to said object data; and
• updating means provided for updating said object data with a new position and a new surface-area, which are valued with respect to said next of said successive images.

7. A combined set of a tag and a device according to the claims 5 or 6, which tag is provided to be carried by at least one of said at least one objects, which device further comprises:
• visual identification means provided for identifying said tag on the basis of at least one of said successive images;
• second determination means provided for determining on which of said at least one object said tag is identified and assigning an identity based on said tag to at least one of said objects; and
• an identity memory provided for storing said identity assigned to said at least one of said objects.
